(19) Europäisches Patentamt
European Patent Office
Office européen des brevets

(11) **EP 1 277 704 B1**

(12) **EUROPEAN PATENT SPECIFICATION**

(45) Date of publication and mention of the grant of the patent:
**25.02.2009 Bulletin 2009/09**

(51) Int Cl.:
***C01G 23/07*** (2006.01)     ***C01G 23/00*** (2006.01)

(21) Application number: **01921996.3**

(22) Date of filing: **23.04.2001**

(86) International application number:
**PCT/JP2001/003449**

(87) International publication number:
**WO 2001/081245 (01.11.2001 Gazette 2001/44)**

(54) **PROCESS FOR PRODUCING FINELY PARTICULATE OXIDE COMPOSITE CONTAINING TITANIUM OXIDE**

VERFAHREN ZUR HERSTELLUNG FEINER, TITANDIOXIDHALTIGER OXIDKOMPOSITTEILCHEN

PROCEDE DE PRODUCTION D'UN COMPOSE D'OXYDE A PARTICULES FINES CONTENANT DE L'OXYDE DE TITANE

(84) Designated Contracting States:
**AT BE CH CY DE DK ES FI FR GB GR IE IT LI LU MC NL PT SE TR**

(30) Priority: **25.04.2000 JP 2000124816**
**19.02.2001 JP 2001041462**

(43) Date of publication of application:
**22.01.2003 Bulletin 2003/04**

(73) Proprietor: **Showa Denko K.K.**
**Tokyo 105-8518 (JP)**

(72) Inventors:
• **TANAKA, Jun,**
**Showa Titanium Co., Ltd**
**Toyama-shi,**
**Toyama 931-8577 (JP)**

• **TOMIKAWA, Shinichiro,**
**Shiojiri Plant**
**Shiojiri-shi,**
**Nagano 399-6461 (JP)**

(74) Representative: **Strehl Schübel-Hopf & Partner**
**Maximilianstrasse 54**
**80538 München (DE)**

(56) References cited:
EP-A- 1 256 550        WO-A-01/23305
JP-A- 8 502 945        JP-A- 9 315 818
JP-A- 10 251 021       JP-A- 11 197 513
US-A- 3 208 866        US-A- 3 615 202
US-A- 5 562 764

**Description**

Technical Field

The present invention relates to a production process for a complex oxide containing titanium oxide obtained by a vapor phase method. More specifically, the present invention relates to a production process for a complex oxide containing titanium oxide starting from titanium tetrachloride and a solution or slurry of a salt containing a metallic element.

Background Art

The industrial field where ultrafine particulate titanium oxide is applied is recently expanding. For example, studies are being made on uses over a wide range such as starting material for high-performance dielectric, ultraviolet-shielding material, additive to silicone rubber and photocatalytic material.

Use as a starting material for Perovskite-type dielectric is described below.

As shown in the following reaction formula, titanium oxide is subjected to a solid phase reaction with barium carbonate at a temperature of about 1,200°C to produce a barium titanate dielectric material:

$$BaCO_3 + TiO_2 \rightarrow BaTiO_3 + CO_2$$

In this case, barium carbonate decomposes at about 700°C to produce BaO having high ionicity and this BaO causes diffusion and solid solution into a $TiO_2$ particle having a covalent bonding property to produce barium titanate. The particle size of barium titanate is decided by the crystal size of $TiO_2$ at the time of reaction and therefore, the crystallinity, the particle size and the like of titanium oxide as a starting material are important.

Also, to cope with the requirement for higher dielectric constant or smaller size of a ceramic capacitor, ultrafine particulate barium titanate is demanded and heretofore, investigations have been made for forming ultrafine particles of titanium oxide as a starting material. The ultrafine particle is not clearly defined so far but, in general, indicates a fine particle having a primary particle size of about 0.1 $\mu$m or less.

However, titanium oxide particles having a particle size of 0.1 $\mu$m or less undertake vigorous growth in the vicinity of the above-described reaction temperature of 700°C and disadvantageously fail in contributing to the formation of ultrafine particulate barium titanate. Accordingly, titanium oxide suitable solving such a problem is being demanded.

By taking notice of the photocatalytic activity, uses for the antifouling, sterilization or deodorization purpose, or by taking notice of the ultraviolet-shielding effect, uses for cosmetic materials are attracting an attention. These uses are supported by excellent safety, processability, functionality and durability of titanium oxide.

Photocatalysis is described below.

Titanium oxide has a property of absorbing an ultraviolet ray at a wavelength of about 400 nm or less and exciting an electron. An electron and a hole generated and reached the particle surface combine with oxygen or water to generate various radicals. These radicals mainly show an oxidation activity and decompose by oxidation substances adhering to the surface. This is a basic principle of photocatalysis.

In order to enhance the photocatalytic activity, for example, the following methods are used.

(1) To reduce particle size

This is very effective for inhibiting recombination of an electron and a hole generated.

(2) To enhance crystallinity

This is effective for increasing the diffusion rate of an electron and a hole generated to the surface.

(3) To perform charge separation

An electron and a hole generated are subjected to charge separation and the yield thereof reaching the surface is increased.

(4) To control band gap

The band gap is reduced (maximum absorption wavelength is increased) by adding trace impurities, whereby use ratio of light, for example, sunlight can be elevated.

Among these means, various additives are being studied for the purpose of (3) and (4) in recent years.

In order to coat fine particulate titanium oxide having the above-described photocatalytic effect on a support, a method of coating a slurry obtained by mixing it with a binder on a support and then baking the coating at 600°C or more may be used. However, at this time, primary particles grow due to sintering, as a result, the catalytic activity disadvantageously decreases.

Conventionally, in the production process of fine particulate composite oxide containing titanium oxide, a surface treatment by a liquid phase method is a representative process. However, this process has a problem in that a step of removing a solvent, namely, filtration and drying is necessary and moreover, in the case where the solvent is water, the water works out to a binder and accelerates the coagulation and therefore, a step of strongly cracking or pulverizing the agglomerate is required. Furthermore, when an organic solvent is employed, a system for recovering the solvent is necessary and a cumbersome production process results.

JP-A-11-228139 (the term "JP-A" as used herein means an "unexamined published Japanese patent application") discloses a technique of obtaining a composite powder material by atomizing and combusting an emulsion starting from an organic solvent/dispersant and an aqueous solution having dissolved therein a salt containing titanium oxide of BET 15 $m^2/g$ or more and a metallic element. This method is, however, disadvantageous in that the process takes a long time and a large amount of a flammable solvent is necessary for the combustion.

US-A-5 562 764 and US-3 615 202 describe the production of a complex oxide containing titanium oxide by vapour phase processes.

Object of the Invention

By taking account of the above-described uses of fine particulate metal oxide, the object of the present invention is to provide a simple and easy process for producing ultrafine particulate complex oxide (sometimes also called "compound oxide") containing titanium oxide.

Summary of the Invention

As a result of extensive investigations on conventional techniques, the present inventors have found that the above-described problems can be solved by producing an ultrafine particulate complex oxide having a BET specific surface area of 5 to 200 $m^2/g$ by a one-stage reaction, more specifically, in the vapor phase process for producing a complex oxide containing titanium oxide, by reacting a starting material gas containing titanium tetrachloride, an oxidizing gas, each gas being pre-heated at 700°C or more, and fed into a reaction tube at a velocity of 10 m/s or more and a solution or slurry of a salt containing a metallic element.

That is, the present invention relates to a process for producing a complex oxide containing titanium oxide.

(1) A process for producing ultrafine particulate complex oxide containing titanium oxide, comprising vapor-phase producing a complex oxide containing titanium oxide having a BET specific surface area of 5 to 200 $m^2/g$, wherein a starting material gas containing titanium tetrachloride and an oxidizing gas, each gas being preheated to 700°C or more, are reacted with a solution or a slurry of a salt containing a metallic element.

(2) The process for producing a complex oxide containing titanium oxide as described in 1 above, wherein the complex oxide contains a titanium-oxygen-metallic element bond.

(3) The process for producing a complex oxide containing titanium oxide as described in 1 or 2 above, wherein the salt containing a metallic element is at least one salt selected from the group consisting of a hydroxide, a halide, a nitrate, a sulfate, a carbonate and an organic acid salt each containing a transition metal element.

(4) The process for producing a complex oxide containing titanium oxide as described in 1 or 2 above, wherein the salt containing a metallic element is at least one salt selected from the group consisting of a hydroxide, a halide, a nitrate, a sulfate, a carbonate and an organic acid salt each containing an alkaline earth metal.

(5) The process for producing a complex oxide containing titanium oxide as described in 1 or 2, wherein the salt containing a metallic element is at least one salt selected from the group consisting of a hydroxide, a halide, a nitrate, a sulfate, a carbonate and an organic acid salt each containing an alkali metal.

(6) The process for producing a complex oxide containing titanium oxide as described in 1 or 2 above, wherein the salt containing a metallic element is at least one salt selected from the group consisting of a hydroxide, a halide, a nitrate, a sulfate, a carbonate and an organic acid salt each containing a metal of Group IIIb or IVb.

(7) The process for producing a complex oxide containing titanium oxide as described in any one of 1 to 6 above, wherein the solvent of the solution or slurry having a boiling point of 40°C or more at an atmospheric pressure is used.

(8) The process for producing a complex oxide containing titanium oxide as described in any one of 1 to 7 above, wherein the solution or slurry is fed at a position upstream from the point of initiating the reaction of the starting material gas containing titanium tetrachloride with the oxidizing gas.

(9) The process for producing a complex oxide containing titanium oxide as described in any one of 1 to 7 above, wherein the solution or slurry is fed between the point of initiating the reaction of the starting material gas containing titanium tetrachloride with the oxidizing gas and the position 200 mm downstream from the point.

(10) The process for producing a complex oxide containing titanium oxide as described in any one of 1 to 9, wherein the solution or slurry is fed in the atomized state.

(11) The process for producing a complex oxide containing titanium oxide as described in any one of 1 to 10 above, wherein the reaction is performed by feeding the starting material gas containing titanium tetrachloride and the oxidizing gas, each gas being preheated at 700°C or more, to a reaction tube each at a velocity of 10 m/sec or more.

(12) The process for producing a complex oxide containing titanium oxide as described in 11 above, wherein the reaction is performed by allowing the starting material gas containing titanium tetrachloride and the oxidizing gas to stay in the reaction tube under a temperature condition such that the temperature within the reaction tube exceeds 600°C, for a time period of 1.0 second or less.

(13) The process for producing a complex oxide containing titanium oxide as described in 11 or 12 above, wherein the average velocity of the starting material gas within the reaction tube is 5 m/sec or more.

(14) The process for producing a complex oxide containing titanium oxide as described in any one of 11 to 13 above, wherein a turbulence is generated upon feeding of the starting material gas containing titanium tetrachloride and the oxidizing gas, each gas being preheated, into the reaction tube.

(15) The process for producing a complex oxide containing titanium oxide as described in any one of 11 to 14 above, wherein the starting material gas containing titanium tetrachloride and the oxidizing gas are fed into the reaction tube through a coaxial parallel-flow nozzle and the inner tube of the coaxial parallel-flow nozzle has an inside diameter of 50 mm or less.

(16) The process for producing a complex oxide containing titanium oxide as described in any one of 1 to 15, wherein as the starting material gas containing titanium tetrachloride, gaseous titanium tetrachloride and a gas containing 10 vol% or more of titanium tetrachloride diluted by an inert gas are used.

(17) The process for producing a complex oxide containing titanium oxide as described in any one of 1 to 16 above, wherein the starting material gas containing titanium tetrachloride and the oxidizing gas each is preheated at 1,000°C or more.

Brief Description of Drawing

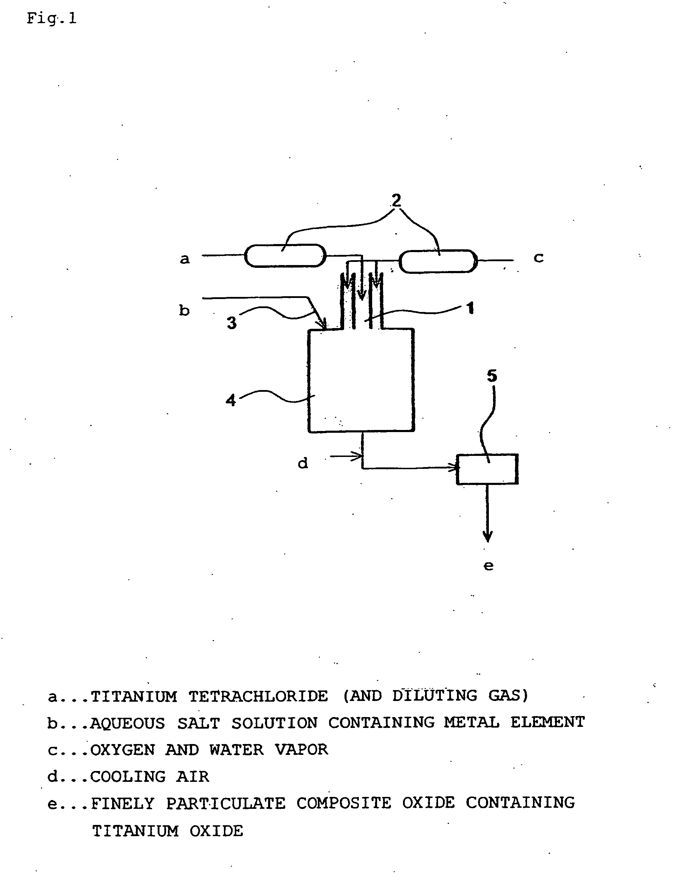

Fig. 1 is a schematic view roughly showing an example of the reaction tube with a coaxial parallel-flow nozzle suitably used in the present invention.

Disclosure of the Invention

The present invention is described in detail below.

The present invention relates to a production process of a complex oxide containing titanium oxide, characterized in that in a vapor phase method of oxidizing mainly titanium tetrachloride with an oxidizing gas at a high temperature to produce an ultrafine particulate complex oxide containing titanium oxide, a starting material gas containing titanium tetrachloride, an oxidizing gas, each gas being preheated at 700°C or more, and each is fed into a reaction tube at a velocity of 10 m/s or more and a solution or slurry of a salt containing a metallic element are reacted and thereby, an ultrafine particulate complex oxide containing titanium oxide having a BET specific surface area of 5 to 200 $m^2/g$ can be produced by a one-stage reaction.

In the process for producing an ultrafine particulate complex oxide containing titanium oxide of the present invention, the oxidizing gas is oxygen, water vapor or a mixed gas thereof.

In the present invention, the starting material gas containing titanium tetrachloride and the oxidizing gas each must be preheated at a temperature of at least 700°C or more, preferably 900°C or more, before the reaction. If the preheating temperature of the starting material gas containing titanium tetrachloride and the oxidizing gas is less than 700°C, the reactivity deteriorates in the reaction with a solution or slurry of a salt containing a metallic element, as a result, ultrafine particles are difficult to form and at the same time, the residual chlorine after dechlorinating increases.

In the present invention, the starting material gas containing titanium tetrachloride and the oxidizing gas each is suitably fed into a reaction tube at a velocity of 10 m/sec or more, preferably 30 m/sec or more. These gases are preferably reacted to allow the gases to stay and react within the reaction tube under a high-temperature condition in excess of 600°C for 1.0 second or less (hereinafter sometimes referred to as a "high-temperature residence time").

In particular, as a result of extensive investigations on the growing mechanism of particles in a gas phase method, the present inventors have found that ultrafine particulate oxide can be obtained preferably by controlling, as factors acting on the growth of particles, CVD (chemical vapor deposition) mechanism and the combining/sintering growth mechanism due to the collision of particles (by reducing the growing time in either growth). More specifically, in the former growth, the preheating temperature is elevated to enhance the chemical reactivity (reaction rate) and thereby, the growth of oxide can be suppressed. In the latter growth, after the completion of CVD, the system is swiftly subjected to cooling, dilution or the like to reduce the high-temperature residence time as much as possible, whereby the growth due to sintering or the like can be suppressed. By selecting the production conditions as such, an ultrafine particulate complex oxide containing titanium oxide, having a BET specific surface area of 5 to 200 $m^2$/g, preferably from 10 to 100 $m^2$/g, can be obtained.

The velocity at the time of introducing the starting material gas containing titanium tetrachloride and the oxidizing gas into a reaction tube is 10 m/sec or more, because by increasing the velocity, the mixing of two gases is accelerated. When the temperature at the introduction of gases into a reaction tube is 700°C or more, the reaction is completed simultaneously with the mixing and therefore, the generation of uniform nuclei is encouraged and at the same time, the zone of causing formation of particles grown under CVD control can be shortened.

In the present invention, the starting material is preferably introduced into a reaction tube so that the gases introduced into the reaction tube can be thoroughly mixed. As long as the gases are thoroughly mixed, the fluid state of gases within the reaction tube is not particularly limited but, for example, a fluid state of causing turbulence is preferred. A vortex flow may also be present.

There is a method, for example, of increasing the velocity in order to introduce sufficiently the starting material gas mixed in a fluid state of causing turbulence or in a state of causing a vortex flow. Usually, a vortex flow occurs when the velocity is more than 30 m/sec.

In the present invention, the starting material gas and an oxidizing gas fed into the reaction tube preferably flow at a higher rate so as to perform a complete mixing of the gases. Particularly, the average velocity is preferably 5 m/sec or more. When the gases flow at a velocity of 5 m/sec or more within the reaction tube, the gases can be satisfactorily mixed within the reaction tube.

The inlet nozzle for introducing the starting material gas into the reaction tube may be a nozzle of giving coaxial parallel flow, oblique flow, cross flow or the like but the present invention is not limited thereto. In general, the coaxial parallel-flow nozzle is inferior in the mixing degree to the nozzle of giving oblique flow or cross flow but is preferably used in view of the design because of its simple structure. For example, in the case of a coaxial parallel-flow nozzle, the starting material gas containing a titanium tetrachloride is introduced into the inner tube and the oxidizing gas is introduced into the outer tube. In view of the mixing of gases, the inner diameter is preferably 50 mm or less, more preferably from 10 to 50 mm.

Salts containing a metallic element are reacted with the above mentioned starting material gas and an oxidizing gas in the present invention.

A metallic element is elements shown in Table 1. The metallic element is preferably a transition metallic element, an alkaline earth metal, an alkali metal element or a metal of Group IIIb or IVb.

Table 1

Elements Defined as Metallic Element

| | Ia | IIa | IIIa | IVa | Va | VIa | VIIa | VIII | | | Ib | IIb | IIIb | IVb | Vb | VIb | VIIb | O |
|---|---|---|---|---|---|---|---|---|---|---|---|---|---|---|---|---|---|---|
| 1 | | | | | | | | | | | | | | | | | | |
| 2 | 3 Li | 4 Be | | | | | | | | | | | 5 B | | | | | |
| 3 | 11 Na | 12 Mg | | | | | | | | | | | 13 Al | 14 Si | 15 P | | | |
| 4 | 19 K | 20 Ca | 21 Sc | | 23 V | 24 Cr | 25 Mn | 26 Fe | 27 Co | 28 Ni | 29 Cu | 30 Zn | 31 Ga | 32 Ge | 33 As | 34 Se | | |
| 5 | 37 Rb | 38 Sr | 39 Y | 40 Zr | 41 Nb | 42 Mo | 43 Tc | 44 Ru | 45 Rh | 46 Pd | 47 Ag | 48 Cd | 49 In | 50 Sn | 51 Sb | 52 Te | | |
| 6 | 55 Cs | 56 Ba | (LAN) | 72 Hf | 73 Ta | 74 W | 75 Re | 76 Os | 77 Ir | 78 Pt | 79 Au | 80 Hg | 81 Tl | 82 Pb | 83 Bi | 84 Po | 85 At | |
| 7 | 87 Fr | 88 Ra | (ACT) | | | | | | | | | | | | | | | |

| Lanthanide (rare earth) | 57 La | 58 Ce | 59 Pr | 60 Nd | 61 Pm | 62 Sm | 63 Eu | 64 Gd | 65 Tb | 66 Dy | 67 Ho | 68 Er | 69 Tm | 70 Yb | 71 Lu |
|---|---|---|---|---|---|---|---|---|---|---|---|---|---|---|---|
| Actinoid | 89 Ac | 90 Th | 91 Pa | 92 U | 93 Np | 94 Pu | 95 Am | 96 Cm | 97 Bk | 98 Cf | 99 Es | 100 Fm | 101 Md | 102 No | 103 Lr |

EP 1 277 704 B1

The salt containing a metallic element may be at least one freely selected from a hydroxide, a halide, a nitrate, a sulfate, a carbonate and an organic acid salt of the above-mentioned metal elements.

The salt containing a metallic element may be fed into a reactor in the solution or slurry state but is preferably fed in the solution state.

The solvent of a solution or a slurry is preferably a solvent having a boiling point of 40°C or more at an atmospheric pressure. Specific examples thereof include water, methanol, ethanol, propanol, 2-propanol, 1-butanol, 2-butanol, acetone, methyl ethyl ketone, dibutyl ether, N,N-dimethylformamide, dimethyl sulfoxide, formic acid, acetic acid, ethyl acetate, benzene, toluene, hexane and octane. Among these, in view of polarity and handleability, water is preferred. If the boiling point is less than 40°C, the solvent may be evaporated within the feeding nozzle and this is not preferred.

The solution or slurry may be fed at a position upstream from the point of initiating the reaction of the starting material gas containing titanium tetrachloride with the oxidizing gas or may be fed between the point of initiating the reaction of the starting material gas containing titanium tetrachloride with the oxidizing gas and the position 200 mm downstream from the point, according to the flowing direction. If the feeding point is more downstream, the additive distribution in the produced oxide disadvantageously becomes non-uniform.

The solution or slurry may also be fed by the dropwise addition or atomization to the reaction mixture of the starting material gas containing titanium tetrachloride and the oxidizing gas. In view of uniform mixing, the solution or slurry is preferably fed in the atomized state.

The reaction within the reaction tube is an exothermic reaction. If the reaction temperature is higher than the sintering temperature of the produced ultrafine particulate complex oxide containing titanium oxide, unless the produced fine particles are rapidly cooled, sintering thereof proceeds to give grown particles. The reaction temperature is also preferably 600°C or more. If the reaction temperature is less than this range, the reactivity is bad, the addition yield of metal is low and fine particles are difficult to form. In the present invention, it is preferred that the preheating temperature of starting material gas and the amount of solution or slurry of the metal added are adjusted, the reaction temperature is set to 600°C or more, the high-temperature residence time in excess of 600°C within the reaction tube is set to 1.0 second or less, and the particles after the reaction are rapidly cooled.

For rapidly cooling the particles after the reaction, a method of introducing a large amount of cooling air or gas such as nitrogen into the mixture after the reaction or a method of spraying water thereon may be used.

Fig. 1 is a schematic view roughly showing an example of a reaction tube with a coaxial parallel-flow nozzle for use in the production of an ultrafine particulate composite oxide of the present invention. The starting material gas containing titanium tetrachloride is pre-heated to a predetermined temperature by a preheating unit 2 and introduced into the reaction tube 4 through the inner tube of a coaxial parallel-flow nozzle 1. The oxidizing gas is preheated to a predetermined temperature by the preheating unit 2 and introduced into the reaction tube 4 through the outer tube of the coaxial parallel-flow nozzle 1. The salt solution or slurry containing a metallic element is introduced into the reaction mixture of the titanium tetrachloride and the oxidizing gas from the outside of the nozzle through an inlet nozzle 3. The gases and the salt solution or slurry containing a metallic element introduced into the reaction tube are mixed, reacted, rapidly cooled by a cooling gas and thereafter, transferred to a bag filter 5 where the ultrafine particulate complex oxide is collected. A dechlorinating treatment was performed by heating the collected particles in an oven at 300 to 600 °C for a half an hour to 4 hours in an air atmosphere.

The starting material gas containing titanium tetrachloride may be used in the form of a 100 vol% titanium tetrachloride gas as it is but is preferably charged after diluting it with an inert gas to a concentration of 10 to less than 100 vol%, preferably from 20 to less than 100 vol%. By using a gas of 10 vol% or more as a starting material, generation of uniform nuclei increases and the reactivity is enhanced. The inert gas is selected from those which are not reactive with titanium tetrachloride and not oxidized. To speak specifically, the diluting gas is preferably nitrogen, argon or the like.

The ultrafine particulate complex oxide obtained by the production process of the present invention is described below. The average primary particle size of the ultrafine particulate complex oxide of the present invention is from 0.008 to 0.3 $\mu$m, preferably from 0.015 to 0.15 $\mu$m.

As an index (the evaluation method is described later) for sintering resistance of the ultrafine particulate complex oxide, the decrease ratio of BET specific surface area after the heating is evaluated, as a result, the decrease ratio of BET specific surface area of the fine particulate complex oxide containing a titanium-oxygen-metal bond is 20% or less after the heating at 700°C for 1 hour.

The ultrafine particulate complex oxide obtained by the production process of the present invention may take a core/shell structure preferably having a dissimilar metal oxide crystal structure. For example, in the case of a titanium-metal ultrafine particulate complex oxide containing a mixed crystal state where a titanium-oxygen-dissimilar metal bond is present within the primary particle, a structure such that a $TiO_2$ phase is rich in the core and a dissimilar metal oxide phase is rich in the shell is observed.

The ultrafine particulate complex oxide can be singly used for a pigment or a dielectric starting material or as a composition containing the complex oxide, used for various compositions and products such as cosmetic, cloth, ultraviolet-shielding agent, abrasive, silicon rubber or paper. The ultrafine particulate complex oxide can also be used as a photocatalytic powder material controlled in the photocatalytic effect.

Best Mode for Carrying Out The Invention

The present invention is described in greater detail below by referring to the Examples, however, the present invention is not limited to these examples.

[Evaluation of Sintering Resistance]

The decrease ratio of BET specific surface area after heating is employed as an index for evaluating sintering resistance of the ultrafine particulate complex oxide of the present invention.

In an alumina-made crucible, 1 g of a starting powder material was charged and in a Siliconit oven, heated at 700°C for 1 hour. After cooling to room temperature, the BET specific surface area was measured. Assuming that the BET specific surface area of the starting powder material is B1 ($m^2/g$) and the BET specific surface area after the heating is B2 ($m^2/g$),

$$\text{Decrease ratio of BET specific surface area} = \{1-(B2/B1)\}\times 100 \ (\%)$$

As the decrease ratio of BET specific surface area is smaller, the sintering resistance is judged higher.

(Evaluation of Mixed Crystal State)

In the present invention, XPS (X-ray photoelectron spectroscopy) is employed for confirming the mixed crystal state. The details thereon are described in A. Yu. Stakheev et al., J. Phys. Chem., 97(21), 5668-5672 (1993), and the like.

Example 1

A reaction tube shown in Fig. 1 whose inner tube of a coaxial parallel-flow nozzle had a diameter of 20 mm was used. 11.8 $Nm^3/hr$ (N means a standard state, hereinafter the same) of gaseous titanium tetrachloride in a concentration of 100 vol% and a mixed gas containing 8 $Nm^3/hr$ of oxygen and 20 $Nm^3/hr$ of water vapor were preheated to 1,100°C and 1,000°C, respectively, and then titanium tetrachloride was introduced into the inner tube of a coaxial parallel-flow nozzle and a mixed gas containing oxygen and water vapor was introduced into the outer tube at velocities of 53 m/sec and 50 m/sec, respectively. At this time, 3.7 kg/hr of an aqueous 20% zirconium oxychloride solution was sprayed from the outer circumferential part of the coaxial parallel-flow nozzle.

The inside velocity at a reaction temperature of 900°C within the reaction tube was 10 m/sec as calculated. For controlling the high-temperature residence time within the reaction tube to 0.8 seconds or less, a cooling air was introduced into the reaction tube after the reaction and then, the produced powder material was collected using a Teflon-made bag filter. Thereafter, a dechlorinating treatment was performed by heating the particles in an oven at 500°C for 1 hour in an air atmosphere.

The thus-obtained titanium oxide had a BET specific surface area of 22 $m^2/g$ and an average primary particle size of 0.08 $\mu m$, and 0.8% of zirconium was detected. By XPS, a titanium-oxygen-zirconium bond was recognized.

The decrease ratio of BET specific surface area (hereinafter referred to as $\Delta B$) after 700°C for 1 hour heating was 12%.

Example 2

By using a reaction tube shown in Fig. 1 whose inner tube of the coaxial parallel-flow nozzle had a diameter of 20 mm, a starting material gas containing titanium tetrachloride obtained by mixing 10.6 $Nm^3/hr$ of gaseous titanium tetrachloride and 6.0 $Nm^3/hr$ of nitrogen and a mixed gas containing 8 $Nm^3/hr$ of oxygen and 30 $Nm^3/hr$ of water vapor were preheated to 1,100°C and 1,100°C, respectively, and then the gas containing titanium tetrachloride was introduced into the inner tube of the coaxial parallel-flow nozzle and a mixed gas containing oxygen and water vapor was introduced into the outer tube at velocities of 74 m/sec and 66 m/sec, respectively. At this time, 7.1 kg/hr of an aqueous 20% chromium trichloride solution was sprayed from the outer circumferential part of the coaxial parallel-flow nozzle.

The inside velocity at a reaction temperature of 1,000°C within the reaction tube was 10 m/sec as calculated. For controlling the high-temperature residence time within the reaction tube to 0.9 seconds or less, a cooling air was introduced into the reaction tube after the reaction and then, the produced powder material was collected using a Teflon-made bag filter. Thereafter, a dechlorinating treatment was performed by heating the particles in an oven at 500°C for 1 hour in an air atmosphere.

The thus-obtained titanium oxide had a BET specific surface area of 34 $m^2$/g and an average primary particle size of 0.04 $\mu$m, and 1.1% of chromium was detected. By XPS, a titanium-oxygen-chromium bond was recognized. The $\Delta B$ was 10%

Example 3

By using a reaction tube shown in Fig. 1 whose inner tube of the coaxial parallel-flow nozzle had a diameter of 24 mm, a starting material gas containing titanium tetrachloride obtained by mixing 10.6 $Nm^3$/hr of gaseous titanium tetrachloride and 10.0 $Nm^3$/hr of nitrogen and a mixed gas containing 8 $Nm^3$/hr of oxygen and 30 $Nm^3$/hr of water vapor were preheated to 1,050°C and 1,100°C, respectively, and then the gas containing titanium tetrachloride was introduced into the inner tube of the coaxial parallel-flow nozzle and a mixed gas containing oxygen and water vapor was introduced into the outer tube at velocities of 64 m/sec and 36 m/sec, respectively. At this time, 6.5 kg/hr of an aqueous 20% magnesium nitrate solution was sprayed from the outer circumferential part of the coaxial parallel-flow nozzle.

The inside velocity at a reaction temperature of 1,000°C within the reaction tube was 10 m/sec as calculated. For controlling the high-temperature residence time within the reaction tube to 0.9 seconds or less, a cooling air was introduced into the reaction tube after the reaction and then, the produced powder material was collected using a Teflon-made bag filter. Thereafter, a dechlorinating treatment was performed by heating the particles in an oven at 500°C for 1 hour in an air atmosphere.

The thus-obtained titanium oxide had a BET specific surface area of 40 $m^2$/g and an average primary particle size of 0.04 $\mu$m, and 0.5% of magnesium was detected. By XPS, a titanium-oxygen-magnesium bond was recognized. The $\Delta B$ was 13%.

Comparative Example 1

By using a reaction tube shown in Fig. 1 whose inner tube of the coaxial parallel-flow nozzle had a diameter of 20 mm, 11.8 $Nm^3$/hr of gaseous titanium tetrachloride in a concentration of 100 vol% and a mixed gas containing 8 $Nm^3$/hr of oxygen and 20 $Nm^3$/hr of water vapor were preheated to 1,000°C and 900°C, respectively, and then gaseous titanium tetrachloride was introduced into the inner tube of the coaxial parallel-flow nozzle and a mixed gas containing oxygen and water vapor was introduced into the outer tube at velocities of 49 m/sec and 50 m/sec, respectively.

The inside velocity at a reaction temperature of 1,000°C within the reaction tube was 10 m/sec as calculated. For controlling the high-temperature residence time within the reaction tube to 0.8 seconds or less, a cooling air was introduced into the reaction tube after the reaction and then, the produced powder material was collected using a Teflon-made bag filter. Thereafter, a dechlorinating treatment was performed by heating the particles in an oven at 500°C for 1 hour in an air atmosphere.

The thus-obtained titanium oxide had a BET specific surface area of 20 $m^2$/g and an average primary particle size of 0.08 $\mu$m. The $\Delta B$ was 35% and this reveals that the sintering readily occurs as compared with the titanium oxide having similar specific surface area and particle size of Example 1.

Comparative Example 2

By using a reaction tube shown in Fig. 1 whose inner tube of the coaxial parallel-flow nozzle had a diameter of 20 mm, a starting material gas containing titanium tetrachloride obtained by mixing 10.6 $Nm^3$/hr of gaseous titanium tetrachloride and 6.0 $Nm^3$/hr of nitrogen and a mixed gas containing 8 $Nm^3$/hr of oxygen and 30 $Nm^3$/hr of water vapor were preheated to 1,000°C and 800°C, respectively, and then the gas containing titanium tetrachloride was introduced into the inner tube of the coaxial parallel-flow nozzle and a mixed gas containing oxygen and water vapor was introduced into the outer tube at velocities of 68 m/sec and 51 m/sec, respectively.

The inside velocity at a reaction temperature of 1,000°C within the reaction tube was 10 m/sec as calculated. For controlling the high-temperature residence time within the reaction tube to 0.9 seconds or less, a cooling air was introduced into the reaction tube after the reaction and then, the produced powder material was collected using a Teflon-made bag filter. Thereafter, a dechlorinating treatment was performed by heating the particles in an oven at 500°C for 1 hour in an air atmosphere.

The thus-obtained titanium oxide had a BET specific surface area of 36 $m^2$/g and an average primary particle size of 0.04 $\mu$m. The $\Delta B$ was 39% and this reveals that sintering readily occurs as compared with the titanium oxide having similar specific surface area and particle size of Example 2.

Industrial Applicability

According to the present invention, the starting material gas containing titanium tetrachloride and the oxidizing gas are each pre-heated to 700°C or more and fed into a reaction tube at a velocity of 10m/s or more and reacted with a solution or slurry of a salt containing a metallic element, whereby an ultrafine particulate complex oxide containing titanium oxide having excellent sintering resistance and a BET specific surface area of 5 to 200 m$^2$/g and containing primary particles in a mixed crystal state can be obtained by a one-stage reaction.

According to the production process of the present invention, the cracking step and the like can be dispensed with or even if required, the load of equipment is very small, thus, practically valuable ultrafine particulate complex oxide containing titanium oxide can be produced very easy and simple and industrially advantageously. Furthermore, according to the method of the present invention, the ultrafine particulate complex oxide whose sintering property or photoactivity are suppressed or controlled can be obtained.

**Claims**

1.    A process for producing ultrafine particulate complex oxide containing titanium oxide, comprising vapor-phase producing a complex oxide containing titanium oxide having a BET specific surface area of 5 to 200 m$^2$/g, wherein a starting material gas containing titanium tetrachloride and an oxidizing gas, each gas being preheated to 700°C or more, and each is suitably fed into a reaction tube at a velocity of 10 m/sec or more are reacted with a solution or a slurry of a salt containing a metallic element.

2.    The process for producing a complex oxide containing titanium oxide as described in claim 1 above, wherein the complex oxide contains a titanium-oxide-metallic element bond.

3.    The process for producing a complex oxide containing titanium oxide as described in claim 1 or 2 above, wherein the salt containing a metallic element is at least one salt selected from the group consisting of a hydroxide, a halide, a nitrate, a sulfate, a carbonate and an organic acid salt each containing a transition metallic element.

4.    The process for producing a complex oxide containing titanium oxide as described in claim 1 or 2 above, wherein the salt containing a metallic element is at least one salt selected from the group consisting of a hydroxide, a halide, a nitrate, a sulfate, a carbonate and an organic acid salt each containing an alkaline earth metal.

5.    The process for producing a complex oxide containing titanium oxide as described in claim 1 or 2, wherein the salt containing a metallic element is at least one salt selected from the group consisting of a hydroxide, a halide, a nitrate, a sulfate, a carbonate and an organic acid salt each containing an alkali metal.

6.    The process for producing a complex oxide containing titanium oxide as described in claim 1 or 2 above, wherein the salt containing a metallic element is at least one salt selected from the group consisting of a hydroxide, a halide, a nitrate, a sulfate, a carbonate and an organic acid salt each containing a metal of Group IIIb or IVb.

7.    The process for producing a complex oxide containing titanium oxide as described in any one of claims 1 to 6 above, wherein the solvent of the solution or slurry having a boiling point of 40°C or more at an atmospheric pressure is used.

8.    The process for producing a complex oxide containing titanium oxide as described in any one of claims 1 to 7 above, wherein the solution or slurry is fed at a position upstream from the point of initiating the reaction of the starting material gas containing titanium tetrachloride with the oxidizing gas.

9.    The process for producing a complex oxide containing titanium oxide as described in any one of claims 1 to 7 above, wherein the solution or slurry is fed between the point of initiating the reaction of the starting material gas containing titanium tetrachloride with the oxidizing gas and the position 200 mm downstream from the point.

10.    The process for producing a complex oxide containing titanium oxide as described in any one of claims 1 to 9, wherein the solution or slurry is fed in the atomized state.

11.    The process for producing a complex oxide containing titanium oxide as described in claim 1 above, wherein the reaction is performed by allowing the starting material gas containing titanium tetrachloride and the oxidizing gas to stay in the reaction tube under a temperature condition such that the temperature within the reaction tube exceeds 600°C, for a time period of 1.0 second or less.

12. The process for producing a complex oxide containing titanium oxide as described in claim 11 above, wherein the average velocity of the starting material gas within the reaction tube is 5 m/sec or more.

13. The process for producing a complex oxide containing titanium oxide as described in any one of claim 11 or 12 above, wherein a turbulence is generated upon feeding of the starting material gas containing titanium tetrachloride and the oxidizing gas, each gas being preheated, into the reaction tube.

14. The process for producing a complex oxide containing titanium oxide as described in any one of claims 11 to 13 above, wherein the starting material gas containing titanium tetrachloride and the oxidizing gas are fed into the reaction tube through a coaxial parallel-flow nozzle and the inner tube of the coaxial parallel-flow nozzle has an inside diameter of 50 mm or less.

15. The process for producing a complex oxide containing titanium oxide as described in any one of claims 1 to 14, wherein as the starting material gas containing titanium tetrachloride, gaseous titanium tetrachloride and a gas containing 10 vol% or more of titanium tetrachloride diluted by an inert gas are used.

16. The process for producing a complex oxide containing titanium oxide as described in any one of claims 1 to 15 above, wherein the starting material gas containing titanium tetrachloride and the oxidizing gas each is preheated at 1,000°C or more.

**Patentansprüche**

1. Verfahren zum Herstellen von ultrafeinen teilchenförmigen Oxidkomplexen, die Titanoxid enthalten, welches das Herstellen eines Oxidkomplexes, welcher Titanoxid mit einer spezifischen Oberfläche BET von 5 bis 200 m$^2$/g enthält, in der Dampfphase umfasst, wobei ein Ausgangsmaterialgas, das Titantetrachlorid enthält, und ein oxidierendes Gas, wobei jedes Gas auf 700°C oder höher vorerhitzt worden ist und jedes Gas in geeigneter Weise in ein Reaktionsröhrchen bei einer Geschwindigkeit von 10 m/sec oder höher eingespeist wird, mit einer Lösung oder einer Aufschlämmung eines Salzes, das ein Metallelement enthält, umgesetzt werden.

2. Verfahren zum Herstellen eines Titanoxid enthaltenden Oxidkomplexes nach Anspruch 1, wobei der Oxidkomplex eine Titanoxid-Metallelement-Bindung aufweist.

3. Verfahren zum Herstellen eines Titanoxid enthaltenden Oxidkomplexes nach Anspruch 1 oder 2, wobei das Metallelement enthaltende Salz mindestens ein Salz ist, das aus der Gruppe ausgewählt ist, die aus einem Hydroxid, Halogenid, Nitrat, Sulfat, Carbonat und dem Salz einer organischen Säure besteht, wobei jedes Salz ein Übergangsmetallelement enthält.

4. Verfahren zum Herstellen eines Titanoxid enthaltenden Oxidkomplexes nach Anspruch 1 oder 2, wobei das Metallelement enthaltende Salz mindestens ein Salz ist, das aus der Gruppe ausgewählt ist, die aus einem Hydroxid, Halogenid, Nitrat, Sulfat, Carbonat und dem Salz einer organischen Säure besteht, wobei jedes Salz ein Erdalkalimetallelement enthält.

5. Verfahren zum Herstellen eines Titanoxid enthaltenden Oxidkomplexes nach Anspruch 1 oder 2, wobei das Metallelement enthaltende Salz mindestens ein Salz ist, das aus der Gruppe ausgewählt ist, die aus einem Hydroxid, Halogenid, Nitrat, Sulfat, Carbonat und dem Salz einer organischen Säure besteht, wobei jedes Salz ein Alkalimetall enthält.

6. Verfahren zum Herstellen eines Titanoxid enthaltenden Oxidkomplexes nach Anspruch 1 oder 2, wobei das Metallelement enthaltende Salz mindestens ein Salz ist, das aus der Gruppe ausgewählt ist, die aus einem Hydroxid, Halogenid, Nitrat, Sulfat, Carbonat und dem Salz einer organischen Säure besteht, wobei jedes Salz ein Metall der Gruppe IIIb oder IVb enthält.

7. Verfahren zum Herstellen eines Titanoxid enthaltenden Oxidkomplexes nach einem der Ansprüche 1 bis 6, wobei das eingesetzte Lösungsmittel der Lösung oder der Aufschlämmung einen Siedepunkt von 40°C oder mehr bei Atmosphärendruck hat.

8. Verfahren zum Herstellen eines Titanoxid enthaltenden Oxidkomplexes nach einem der Ansprüche 1 bis 7, wobei die Lösung oder die Aufschlämmung an einer Stelle stromaufwärts des Punktes des Reaktionsbeginns des Titantetrachlorid enthaltenden Ausgangsmaterialgases mit dem oxidierenden Gas eingespeist wird.

9. Verfahren zum Herstellen eines Titanoxid enthaltenden Oxidkomplexes nach einem der Ansprüche 1 bis 7, wobei die Lösung oder die Aufschlämmung zwischen dem Punkt des Reaktionsbeginns des Titantetrachlorid enthaltenden Ausgangsmaterialgases mit dem Oxidgas und der Position 200 mm stromabwärts von diesem Punkt eingespeist wird.

10. Verfahren zum Herstellen eines Titanoxid enthaltenden Oxidkomplexes nach einem der Ansprüche 1 bis 9, wobei die Lösung oder die Aufschlämmung in zerstäubtem Zustand eingespeist wird.

11. Verfahren zum Herstellen eines Titanoxid enthaltenden Oxidkomplexes nach Anspruch 1, wobei die Reaktion **dadurch** durchgeführt wird, dass das Verbleiben des Titantetrachlorid enthaltenden Ausgangsmaterialgases und des oxidierenden Gases in dem Reaktionsröhrchen unter einer Temperaturbedingung zugelassen wird, so dass während eines Zeitraums von 1,0 sec oder weniger die Temperatur innerhalb des Reaktionsröhrchens 600°C übersteigt.

12. Verfahren zum Herstellen eines Titanoxid enthaltenden Oxidkomplexes nach Anspruch 11, wobei die mittlere Geschwindigkeit des Ausgangsmaterialgases innerhalb des Reaktionsröhrchens 5 m/sec oder höher ist.

13. Verfahren zum Herstellen eines Titanoxid enthaltenden Oxidkomplexes nach Anspruch 11 oder 12, wobei beim Einspeisen des Titantetrachlorid enthaltenden Ausgangsmaterialgases und des oxidierenden Gases, wobei beide Gase vorerhitzt sind, in das Reaktionsröhrchen eine Turbulenz erzeugt wird.

14. Verfahren zum Herstellen eines Titanoxid enthaltenden Oxidkomplexes nach einem der Ansprüche 11 bis 13, wobei das Titantetrachlorid enthaltende Ausgangsmaterialgas und das oxidierende Gas in das Reaktionsröhrchen durch eine Koaxialparallelflussdüse eingespeist werden und das innere Röhrchen der Koaxialparallelflussdüse einen Innendurchmesser von 50 mm oder weniger hat.

15. Verfahren zum Herstellen eines Titanoxid enthaltenden Oxidkomplexes nach einem der Ansprüche 1 bis 14, wobei als das Titantetrachlorid enthaltende Ausgangsmaterialgas gasförmiges Titantetrachlorid und ein Gas, das durch ein Inertgas verdünnt 10 Vol-% oder mehr Titantetrachlorid enthält, eingesetzt werden.

16. Verfahren zum Herstellen eines Titanoxid enthaltenden Oxidkomplexes nach einem der Ansprüche 1 bis 15, wobei das Titantetrachlorid enthaltende Ausgangsmaterialgas und das oxidierende Gas jeweils bei 1000°C oder höher vorerhitzt werden.

**Revendications**

1. Procédé de production d'un oxyde complexe à particules ultrafines contenant de l'oxyde de titane, consistant à produire en phase vapeur un oxyde complexe contenant de l'oxyde de titane ayant une surface spécifique BET de 5 à 200 m$^2$/g, dans lequel un gaz de base contenant du tétrachlorure de titane et un gaz oxydant, chaque gaz étant préchauffé à 700 °C ou plus, et chacun étant fourni de façon appropriée dans un tube à réaction à une vitesse de 10 m/sec ou plus, sont mis en réaction avec une solution ou une bouillie d'un sel contenant un élément métallique.

2. Procédé de production d'un oxyde complexe contenant de l'oxyde de titane selon la revendication 1 ci-dessus, dans lequel l'oxyde complexe contient une liaison de titane-oxyde-élément métallique.

3. Procédé de production d'un oxyde complexe contenant de l'oxyde de titane selon la revendication 1 ou 2 ci-dessus, dans lequel le sel contenant un élément métallique est au moins un sel choisi dans le groupe comprenant un hydroxyde, un halogénure, un nitrate, un sulfate, un carbonate et un sel d'acide organique, contenant chacun un élément métallique de transition.

4. Procédé de production d'un oxyde complexe contenant de l'oxyde de titane selon la revendication 1 ou 2 ci-dessus, dans lequel le sel contenant un élément métallique est au moins un sel choisi dans le groupe comprenant un hydroxyde, un halogénure, un nitrate, un sulfate, un carbonate et un sel d'acide organique, contenant chacun un métal alcalino-terreux.

**5.** Procédé de production d'un oxyde complexe contenant un oxyde de titane selon la revendication 1 ou 2, dans lequel le sel contenant un élément métallique est au moins un sel choisi dans le groupe comprenant un hydroxyde, un halogénure, un nitrate, un sulfate, un carbonate et un sel d'acide organique, contenant chacun un métal alcalin.

**6.** Procédé de production d'un oxyde complexe contenant de l'oxyde de titane selon la revendication 1 ou 2 ci-dessus, dans lequel le sel contenant un élément métallique est au moins un sel choisi dans le groupe comprenant un hydroxyde, un halogénure, un nitrate, un sulfate, un carbonate et un sel d'acide organique, contenant chacun un métal de groupe IIIb ou IVb.

**7.** Procédé de production d'un oxyde complexe contenant de l'oxyde de titane selon l'une quelconque des revendications 1 à 6 ci-dessus, dans lequel le solvant de la solution ou bouillie ayant un point d'ébullition de 40 °C ou plus à une pression atmosphérique est utilisé.

**8.** Procédé de production d'un oxyde complexe contenant de l'oxyde de titane selon l'une quelconque des revendications 1 à 7 ci-dessus, dans lequel la solution ou bouillie est fournie à une position en amont du point de départ de la réaction du gaz de base contenant du tétrachlorure de titane avec le gaz oxydant.

**9.** Procédé de production d'un oxyde complexe contenant de l'oxyde de titane selon l'une quelconque des revendications 1 à 7 ci-dessus, dans lequel la solution ou bouillie est fournie entre le point de départ de la réaction du gaz de base contenant du tétrachlorure de titane avec le gaz oxydant et la position 200 mm en aval de ce point.

**10.** Procédé de production d'un oxyde complexe contenant de l'oxyde de titane selon l'une quelconque des revendications 1 à 9, dans lequel la solution ou bouillie est fournie dans l'état atomisé.

**11.** Procédé de production d'un oxyde complexe contenant de l'oxyde de titane selon la revendication 1 ci-dessus, dans lequel la réaction est effectuée en laissant le gaz de base contenant du tétrachlorure de titane et le gaz oxydant dans le tube de réaction dans une condition de température telle que la température à l'intérieur du tube de réaction dépasse 600 °C, pendant une période de temps de 1,0 seconde ou moins.

**12.** Procédé de production d'un oxyde complexe contenant de l'oxyde de titane selon la revendication 11 ci-dessus, dans lequel la vitesse moyenne du gaz de base à l'intérieur du tube de réaction est de 5 m/sec ou plus.

**13.** Procédé de production d'un oxyde complexe contenant de l'oxyde de titane selon l'une quelconque des revendications 11 ou 12 ci-dessus, dans lequel une turbulence est générée lors de l'introduction du gaz de base contenant du tétrachlorure de titane et du gaz 127 77 04 oxydant, chaque gaz étant préchauffé, dans le tube de réaction.

**14.** Procédé de production d'un oxyde complexe contenant de l'oxyde de titane selon l'une quelconque des revendications 11 à 13 ci-dessus, dans lequel le gaz de base contenant du tétrachlorure de titane et le gaz oxydant sont introduits dans le tube de réaction par le biais d'une buse coaxiale à écoulement parallèle et le tube interne de la buse coaxiale à écoulement parallèle a un diamètre interne de 50 mm ou moins.

**15.** Procédé de production d'un oxyde complexe contenant de l'oxyde de titane selon l'une quelconque des revendications 1 à 14, dans lequel en tant que gaz de base contenant du tétrachlorure de titane, du tétrachlorure de titane gazeux et un gaz contenant 10 % en volume ou plus de tétrachlorure de titane dilué par un gaz inerte sont utilisés.

**16.** Procédé de production d'un oxyde complexe contenant de l'oxyde de titane selon l'une quelconque des revendications 1 à 15 ci-dessus, dans lequel le gaz de base contenant du tétrachlorure de titane et le gaz oxydant sont chacun préchauffés à 1 000 °C ou plus.

Fig.1

a...TITANIUM TETRACHLORIDE (AND DILUTING GAS)

b...AQUEOUS SALT SOLUTION CONTAINING METAL ELEMENT

c...OXYGEN AND WATER VAPOR

d...COOLING AIR

e...FINELY PARTICULATE COMPOSITE OXIDE CONTAINING
    TITANIUM OXIDE

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11228139 A
- US 5562764 A

- US 3615202 A

**Non-patent literature cited in the description**

- **A. YU. STAKHEEV et al.** *J. Phys. Chem.,* 1993, vol. 97 (21), 5668-5672